# EUROPEAN PATENT SPECIFICATION

(11) **EP 1 948 492 B1**
(45) Date of publication and mention of the grant of the patent: **23.07.2014**
(21) Application number: 06799837.7
(22) Date of filing: 05.10.2006
(51) Int. Cl.: B60K 28/10, B60W 30/192, F02D 41/04

(54) **A SYSTEM FOR CONTROLLING THE IGNITION OF A MOTOR VEHICLE**
SYSTEM ZUR STEUERUNG DER ZÜNDUNG EINES KRAFTFAHRZEUGS
SYSTEME DE COMMANDE DE L'ALLUMAGE SUR UN VEHICULE A MOTEUR

(30) Priority: 28.10.2005 SE 0502386
(43) Date of publication of application: 30.07.2008
(73) Proprietor: Scania CV AB (publ), 151 87 Södertälje (SE)
(72) Inventor: MÅRTENSSON, Max, 641 96 Katrineholm (SE)
(86) International application number: PCT/SE2006/050377
(87) International publication number: WO 2007/050028

(56) References cited:
- DE-A1- 4 421 774
- DE-A1-102004 006 374
- US-A- 3 839 924
- US-A- 3 839 924
- US-A- 5 580 136
- US-A- 5 670 831
- US-A- 5 670 831
- US-A- 5 975 648
- US-A- 5 975 648

## Description

### FIELD OF THE INVENTION AND PRIOR ART

The present invention relates to a system according to the preamble of claim 1 and a method according to the preamble of claim 9 for controlling the ignition of a motor vehicle. The invention also relates to a computer program comprising computer program code for implementing such a method, a computer program product comprising a data storage medium readable by an electronic control unit and having such a computer program stored thereon, and an electronic control unit.

Motor vehicles, such as cars, busses, lorries and towing vehicles, are provided with a manually manoeuvrable operating member, for instance in the form of a so-called ignition switch, which has to be manoeuvred to an ON position by the vehicle driver in order to activate the ignition system of the vehicle. The operating member controls a control member, a so-called ignition relay, which is manoeuvrable by means of the operating member to and fro between a switched-off position, in which the control member keeps the ignition of the vehicle switched-off, and a switched-on position, in which the control member keeps the ignition of the vehicle switched-on. In certain situations, it may be desirable, for instance for reasons of security, to prevent the ignition from being switched-off so as to thereby prevent the loss of a vehicle function that is dependent upon switched-on ignition.

US5975648 describes a method for preventing a vehicle from being parked with an activated roll-away preventer and unactivated parking brake. To prevent unintentional rolling of the vehicle upon failure of the roll-away preventer, deactivation of the drive engine by using the ignition key is prevented when a brake pressure is not present to prevent the motor vehicle from rolling.

US5670831 describes a vehicle ignition system capable of putting the vehicle in a state with continued engine running after removal of the ignition key. The system includes a first safety check system which prevents operation to said state unless one or more of a first set of safeguard conditions is met. A timer is arranged to be automatically started to measure a predetermined time delay from removal of the key when the engine is running, and a second safety check system operates when the vehicle is in said state to shut down the engine automatically if one of a second set of safeguard conditions occurs, the second set of safeguard conditions including that the time delay has expired.

DE4421774 describes a brake system for a vehicle including valves for maintaining pressure at the vehicle brakes, where the valves are activated when the vehicle reference speed falls below a predetermined value, whether the pressure is supplied by the brake pedal or an anti-slip regulation. The energy supply for the valves is prevented from being switched off while the pressure is maintained.

### OBJECT OF THE INVENTION

The object of the present invention is to achieve a solution that makes it possible to prevent the ignition of the vehicle from being manually switched-off under certain conditions.

### SUMMARY OF THE INVENTION

According to the invention, said object is achieved by means of a system having the features defined in claim 1 and a method having the features defined in claim 9.

According to the invention, an electronic control unit that is adapted to activate a retention function under predetermined conditions is used, the control unit being adapted, when the retention function is activated, to retain the control member being a relay in switched-on position and thereby prevent the control member from being manoeuvred from switched-on position to switched-off position under the effect of the operating member. By making an electronic control unit take care of the desired retention of the control member in switched-on position, very good possibilities to adapt the retention function in question to the specific security requirements of the motor vehicle in question are obtained. Furthermore, the inventive solution is implementable in an easy manner by relatively simple modifications of existing vehicle systems.

The invention also relates to a computer program having the features defined in claim 17, a computer program product having the features defined in claim 25 and an electronic control unit having the features defined in claim 26.

### BRIEF DESCRIPTION OF THE DRAWINGS

The invention will in the following be more closely described by means of embodiment examples, with reference to the appended drawings, where:
- Fig 1: is an outline diagram of a system according to a first embodiment of the present invention,
- Fig 2: is an outline diagram of a system according to a second embodiment of the invention, and
- Fig 3: is an outline diagram of an electronic control unit for implementing a method according to the invention.

### DETAILED DESCRIPTION OF EMBODIMENTS

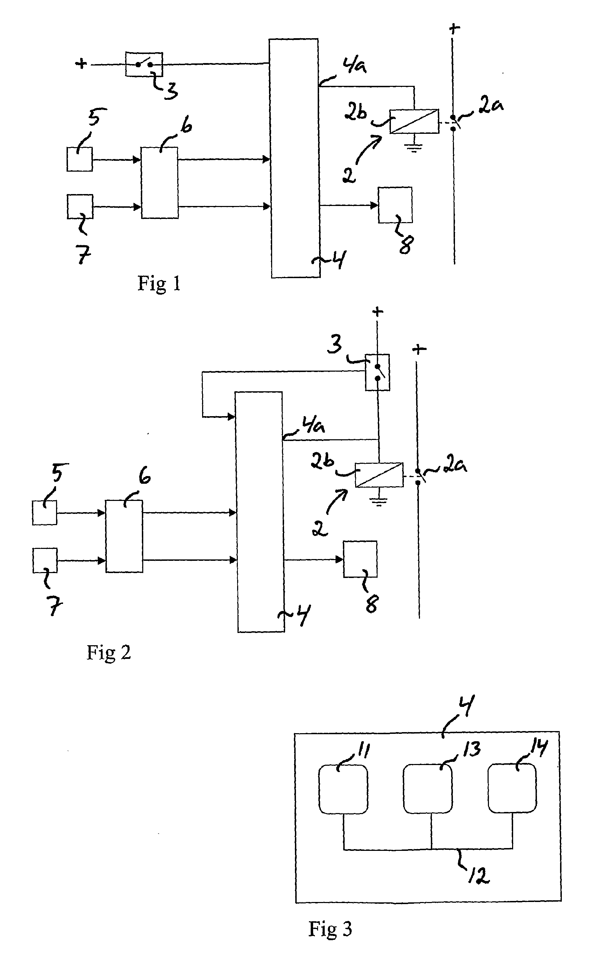

Two different embodiments of a system 1 according to the invention for controlling the ignition of a motor vehicle are schematically illustrated in Figs 1 and 2. The inventive system 1 comprises a control member 2 that is manoeuvrable between a switched-off position, in which the control member is arranged to keep the ignition of the vehicle switched off, and a switched-on position, in which the control member is arranged to keep the ignition of the vehicle switched on. The control member 2 is preferably a relay, a so-called ignition relay, which in a conventional manner comprises a breaker 2a and an electromagnet 2b, where the breaker 2a under the effect of the electromagnet 2b is closed when electric current is supplied through the electromagnet and returns to open position when the supply of current through the electromagnet ceases.

The system 1 further comprises a manually manoeuvrable operating member 3, for instance in the form of a so-called ignition switch, by means of which the control member 2 is manoeuvrable between switched-off position and switched-on position. The operating member 3 is manoeuvrable to an ON position for switching on the ignition and an OFF position for switching off the ignition.

The system 1 further comprises an electronic control unit 4, which is adapted to activate a retention function under predetermined conditions, the control unit 4 being adapted, as long as the retention function is activated, to retain the control member 2 in switched-on position and thereby prevent the control member from being manoeuvred from switched-on position to switched-off position under the effect of the operating member 3. In the illustrated examples, the control unit 4 is adapted, when the retention function is activated, to supply electric current via one of its outlets 4a to the control member 2, to its electromagnet 2b to be precize, so as to thereby retain the control member in switched-on position.

The different conditions for activation and deactivation of the above-mentioned retention function can easily be adapted to the vehicle type and the specific requirements of the vehicle type in question by reprogramming the control unit 4.

In this description and the subsequent claims, deactivation of the retention function implies that the retention function activated by the control unit is interrupted, i.e. that the retention function is brought from active state to inactive state.

A description of conceivable functions of a system according to the embodiment illustrated in Fig 1 follows below.

In the embodiment illustrated in Fig 1, the operating member 3 is arranged to control the control member 2 via the control unit 4. The operating member 3 is in this case adapted to send to the control unit a control signal for switching on the ignition when it is manoeuvred to the ON position and a control signal for switching off the ignition when it is manoeuvred to the OFF position. The control unit 4 is then adapted to control the control member 2 in dependence on these control signals.

When the control unit 4 from the operating member 3 receives a control signal for switching on the ignition, the control unit is adapted to manoeuvre the control member 2 to switched-on position and activate the retention function, on condition that the control member 2 is not already in switched-on position and the retention function is not already activated. The control unit 4 is adapted to deactivate the retention function and manoeuvre the control member 2 from switched-on position to switched-off position when the following conditions, optionally in combination with one or several further conditions, are simultaneously fulfilled:
- the control unit 4 receives information indicating that the parking brake of the vehicle is set, and
- the control unit 4 receives from the operating member 3 a control signal for switching off the ignition.

In the above-indicated case, the control unit 4 is adapted to establish whether the parking brake of the vehicle is set or receive information about that. The control unit 4 may be arranged to receive information regarding the setting state of the parking brake directly from a sensor 5 arranged to sense setting and release of the parking brake or from a control unit 6 of the vehicle connected to such a sensor, such as a brake control unit. Setting and release of the parking brake are suitably sensed by means of a pressure sensor 5 arranged to sense the pressure in the air conduit to the parking brake cylinder. If the sensed pressure is below a predetermined threshold value, for instance in the magnitude of 0.8 bar, this will indicate that the parking brake is set. As an alternative, setting and release of the parking brake could be sensed by means of a sensor arranged to sense the position of the operating member by means of which the driver of the vehicle controls the parking brake.

If the system according to the embodiment illustrated in Fig 1 is used in a vehicle provided with an automatic braking function that is dependent upon switched-on ignition for its operation, such as a conventional bus stop brake and/or hill holding brake of a bus, the control unit 4 is adapted to maintain the retention function active and initiate the generation of a warning in order to alert the driver of the vehicle when the following conditions, optionally in combination with one or several further conditions, are simultaneously fulfilled:
- the control unit 4 receives information indicating that the parking brake of the vehicle is not set,
- the control unit 4 receives information indicating that an automatic braking function of the vehicle is active, and
- the control unit 4 receives from the operating member 3 a control signal for switching off the ignition.

If the system according to the embodiment illustrated in Fig 1 is used in a vehicle provided with an automatic braking function of the above-mentioned type, the control unit 4 should further be adapted to deactivate the retention function, manoeuvre the control member 2 from switched-on position to switched-off position and initiate the generation of a warning in order to alert the driver of the vehicle when the following conditions, optionally in combination with one or several further conditions, are simultaneously fulfilled:
- the control unit 4 receives information indicating that the parking brake of the vehicle is not set,
- the control unit 4 receives information indicating that no automatic braking function of the vehicle is active, and
- the control unit 4 receives from the operating member 3 a control signal for switching off the ignition.

In the above-indicated cases, the control unit 4 is consequently adapted to establish whether an automatic braking function of the vehicle is activated or receive information about that. The control unit 4 may be arranged to receive information regarding the activation state of an automatic braking function directly from an operating member 7 that is manually manoeuvrable for activation of such a braking function or from a control unit 6 of the vehicle connected to such an operating member, such as a brake control unit.

If the system according to the embodiment illustrated in Fig 1 is used in a vehicle that is not provided with any automatic braking function of the above-mentioned type, the control unit 4 is adapted to deactivate the retention function, manoeuvre the control member from switched-on position to switched-off position and initiate the generation of the warning in order to alert the driver of the vehicle when the following conditions, optionally in combination with one or several further conditions, are simultaneously fulfilled:
- the control unit 4 receives information indicating that the parking brake of the vehicle is set, and
- the control unit 4 receives from the operating member 3 a control signal for switching off the ignition.

A description of conceivable functions of a system according to the embodiment illustrated in Fig 2 follows below.

In the embodiment illustrated in Fig 2, the operating member 3 is arranged to control the control member 2 directly. In this case, the operating member 3 is preferably a breaker. In the ON position, the operating member 3 is arranged to conduct electric current to the control member 2, to its electromagnet 2b to be precize. When the operating member 3 is in the OFF position, no electric current is conducted to the control member 2 via the operating member 3. In this case, the operating member 3 is arranged to send to the control unit 4 information indicating switching on of the ignition when it is manoeuvred to the ON position and information indicating switching off of the ignition when it is manoeuvred to the OFF position. The control unit 4 is then adapted to control said retention function in dependence on this information.

In the example illustrated in Fig 2, the control member 2 is retained in switched-on position as long as at least either of the control unit 4 and the operating member 3 allows electric current to be conducted to the control member 2. As long as the control unit 4 keeps the control member 2 energized, the control member will remain in switched-on position no matter whether the operating member 3 is in the ON position or the OFF position.

The control unit 4 is adapted to activate the retention function when it from the operating member 3 receives information indicating switching on of the ignition in connection with the control member 2 being manoeuvred from switched-off position to switched-on position under the effect of the operating member 3. The control unit 4 will hereby secure that the ignition remains switched-on as long as this retention function is activated. When the retention function thereafter, under predetermined conditions, is deactivated, the supply of current to the control member 2 via the outlet 4a of the control unit ceases, whereupon the control member 2 in conventional manner can be manoeuvred from switched-on position to switched-off position under the effect of the operating member 3. The control unit 4 is adapted to deactivate the retention function, and thereby allow the control member 2 to be manoeuvred from switched-on position to switched-off position under the effect of the operating member 3, when the following conditions, optionally in combination with one or several further conditions, are simultaneously fulfilled:
- the control unit 4 receives information indicating that the parking brake of the vehicle is set, and
- the control unit 4 receives information indicating that the operating member 3 has been manoeuvred to the OFF position, i.e. information indicating switching off of the ignition.

If the system according to the embodiment illustrated in Fig 2 is used in a vehicle provided with an automatic braking function of the above-indicated type, the control unit 4 is adapted to maintain the retention function active an initiate the generation of a warning in order to alert the driver of the vehicle when the following conditions, optionally in combination with one or several further conditions, are simultaneously fulfilled:
- the control unit 4 receives information indicating that the parking brake of the vehicle is not set, and
- the control unit 4 receives information indicating that an automatic braking function of the vehicle is active, and
- the control unit 4 receives from the operating member 3 information indicating switching off of the ignition.

If the system according to the embodiment illustrated in Fig 2 is used in a vehicle provided with an automatic braking function of the above-indicated type, the control unit 4 should further be adapted to deactivate the retention function and initiate the generation of a warning in order to alert the driver of the vehicle when the following conditions, optionally in combination with one or several further conditions, are simultaneously fulfilled:
- the control unit 4 receives information indicating that the parking brake of the vehicle is not set, and
- the control unit 4 receives information indicating that no automatic braking function of the vehicle is active, and
- the control unit 4 receives from the operating member 3 information indicating switching off of the ignition.

If the system according to the embodiment illustrated in Fig 2 is used in a vehicle that is not provided with any automatic braking function of the above-mentioned type, the control unit 4 is adapted to deactivate the retention function and initiate the generation of a warning in order to alert the driver of the vehicle when the following conditions, optionally in combination with one or several further conditions, are simultaneously fulfilled:
- the control unit 4 receives information indicating that the parking brake of the vehicle is not set, and
- the control unit 4 receives from the operating member 3 information indicating switching off of the ignition.

The above-indicated warning is generated by means of a warning indicator 8 controlled by the control unit 4, which warning indicator is intended to alert the driver of the vehicle that the parking brake is not set when the ignition is switched off or when a switching off of the ignition is ordered by the driver. The warning should be perceivable by the driver in the driving-cabin and is suitably a light signal and/or an acoustic signal, for instance in the form of a flashing parking brake symbol on the dashboard and/or a buzzer.

Computer program code for implementing a method according to the invention is suitably included in a computer program, which is loadable directly into the internal memory of a computer, such as the internal memory of the above-mentioned control unit 4. Such a computer program is suitably provided via a computer program product comprising a data storage medium readable by an electronic control unit, which data storage medium has the computer program stored thereon. Said data storage medium is for instance an optical data storage medium in the form of a CD-ROM disk, a DVD disk etc, a magnetic data storage medium in the form of a hard disk, a diskette, a cassette tape etc, or a memory of the type ROM, PROM, EPROM or EEPROM or a Flash memory.

The inventive computer program comprises computer program code for causing the computer to activate, under predetermined conditions, for instance the above-indicated conditions, a retention function that makes the above-mentioned control member 2 of a vehicle retain in switched-on position and thereby prevents the control member from being manoeuvred from switched-on position to switched-off position under the effect of a manually manoeuvrable operating member 3, and computer program code for moreover causing the computer to operate in any of the manners described above with respect to the control unit 4.

Fig 3 very schematically illustrates an electronic control unit 4 comprising an execution means 11, such as a central processing unit (CPU), for executing computer software. The execution means 11 communicates with a memory 13, for instance of the type RAM, via a data bus 12. The control unit 4 also comprises data storage medium 14, for instance in the form of a memory of the type ROM, PROM, EPROM or EEPROM or a Flash memory. The execution means 11 communicates with the data storage medium 14 via the data bus 12. A computer program comprising computer program code for implementing a method according to the invention is stored on the data storage medium 14.

This invention is intended to be used in a motor vehicle, such as for instance a bus, a towing vehicle or a lorry.

The invention is of course not in any way restricted to the embodiments described above. On the contrary, many possibilities to modifications thereof should be apparent to a person with ordinary skill in the art without departing from the basic idea of the invention as defined in the appended claims.

## Claims

1. A system for controlling the ignition of a motor vehicle, which system comprises:
- a control member (2) being a relay that is manoeuvrable between a switched-off position, in which the control member (2) is arranged to keep the ignition of the vehicle switched off, and a switched-on position, in which the control member (2) is arranged to keep the ignition of the vehicle switched on, and
- a manually manoeuvrable operating member (3), by means of which the control member (2) is manoeuvrable between switched-off position and switched-on position, the operating member (3) being manoeuvrable to an ON position for switching on the ignition and to an OFF position for switching off the ignition,
**characterized in that** the system comprises an electronic control unit (4) that is adapted to activate a retention function under predetermined conditions, the control unit (4) being adapted, when the retention function is activated, to retain the control member (2) in switched-on position by supplying electric current to the control member and thereby prevent the control member (2) from being manoeuvred from switched-on position to switched-off position under the effect of the operating member (3).

2. A system according to claim 1, **characterized in that** the control unit (4) is adapted to activate the retention function when the control member (2) is manoeuvred from switched-off position to switched-on position under the effect of the operating member (3).

3. A system according to claim 2, **characterized in that** the control unit (4) is adapted to deactivate the retention function, and thereby allow the control member (2) to be manoeuvred from switched-on position to switched-off position under the effect of the operating member 3, when the following conditions, optionally in combination with one or several further conditions, are simultaneously fulfilled:
- the control unit (4) receives information indicating that the parking brake of the vehicle is set, and
- the control unit (4) receives information indicating that the operating member (3) has been manoeuvred to the OFF position.

4. A system according to any of claims 1-3, **characterized in that** the operating member (3), when it is manoeuvred to the ON position, is adapted to send to the control unit (4) a control signal for switching on the ignition, and, when it is manoeuvred to the OFF position, is adapted to send to the control unit (4) a control signal for switching off the ignition, and that the control unit (4) is adapted to control the control member (2) in dependence on these control signals.

5. A system according to claim 4, **characterized in that** the control unit (4), when it from the operating member (3) receives a control signal for switching on the ignition, is adapted to manoeuvre the control member (2) to switched-on position and activate the retention function, on condition that the control member (2) is not already in switched-on position and the retention function is not already activated.

6. A system according to claim 5, **characterized in that** the control unit (4) is adapted to deactivate the retention function, manoeuvre the control member (2) from switched-on position to switched-off position and initiate the generation of a warning in order to alert the driver of the vehicle when the following conditions, optionally in combination with one or several further conditions, are simultaneously fulfilled:
- the control unit (4) receives information indicating that the parking brake of the vehicle is not set, and
- the control unit (4) receives from the operating member (3) a control signal for switching off the ignition.

7. A system according to claim 5 for controlling the ignition of a motor vehicle that is provided with an automatic braking function, such as a bus stop brake and/or a hill holding brake, **characterized in that** the control unit (4) is adapted to maintain the retention function active and initiate the generation of a warning in order to alert the driver of the vehicle when the following conditions, optionally in combination with one or several further conditions, are simultaneously fulfilled:
- the control unit (4) receives information indicating that the parking brake of the vehicle is not set,
- the control unit (4) receives information indicating that an automatic braking function of the vehicle is active, and
- the control unit (4) receives from the operating member (3) a control signal for switching off the ignition.

8. A system according to claim 7, **characterized in that** the control unit (4) is adapted to deactivate the retention function, manoeuvre the control member (2) from switched-on position to switched-off position and initiate the generation of a warning in order to alert the driver of the vehicle when the following conditions, optionally in combination with one or several further conditions, are simultaneously fulfilled:
- the control unit (4) receives information indicating that the parking brake of the vehicle is not set,
- the control unit (4) receives information indicating that no automatic braking function of the vehicle is active, and
- the control unit (4) receives from the operating member (3) a control signal for switching off the ignition.

9. A method for controlling the ignition of a motor vehicle that is provided with:
- a control member (2) being a relay that is manoeuvrable between a switched-off position, in which the control member (2) is arranged to keep the ignition of the vehicle switched-off, and a switched-on position, in which the control member (2) is arranged to keep the ignition of the vehicle switched-on, and
- a manually manoeuvrable operating member (3), by means of which the control member (2) is manoeuvrable between switched-off position and switched-on position, the operating member (3) being manoeuvrable to an ON position for switching on the ignition and an OFF position for switching off the ignition,
**characterized in that** a retention function of a control unit (4) connected to the control member (2) is activated under predetermined conditions in order to retain the control member (2) in switched-on position by supplying an electric current to the control member and thereby prevent the control member (2) from being manoeuvred from switched-on position to switched-off position under the effect of the operating member (3).

10. A method according to claim 9, **characterized in that** the retention function is activated when the control member (2) is manoeuvred from switched-off position to switched-on position under the effect of the operating member (3).

11. A method according to claim 10, **characterized in that** the retention function is deactivated, so that the control member (2) thereby is allowed to be manoeuvred from switched-on position to switched-off position under the effect of the operating member (3), when the following conditions, optionally in combination with one or several further conditions, are simultaneously fulfilled:
- it is established that the parking brake of the vehicle is set, and
- it is established that the operating member (3) has been manoeuvred to the OFF position.

12. A method according to any of claims 9-11, **characterized in that** the operating member (3), when it is manoeuvred to the ON position, sends to the control unit (4) a control signal for switching on the ignition, and, when it is manoeuvred to the OFF position, sends to the control unit (4) a control signal for switching off the ignition, and that the control unit (4) controls the control member (2) in dependence on these control signals.

13. A method according to claim 12, **characterized in that** the control member (2) is manoeuvred to switched-on position and the retention function is activated when the control unit (4) from the operating member (3) receives a control signal for switching on the ignition, on condition that the control member (2) is not already in switched-on position and the retention function is not already activated.

14. A method according to claim 13, **characterized in that** the retention function is deactivated, the control member (2) is manoeuvred from switched-on position to switched-off position and the generation of a warning in order to alert the driver of the vehicle is initiated when the following conditions, optionally in combination with one or several further conditions, are simultaneously fulfilled:
- it is established that the parking brake of the vehicle is not set, and
- the control unit (4) receives from the operating member (3) a control signal for switching off the ignition.

15. A method according to claim 14 for controlling the ignition of a motor vehicle that is provided with an automatic braking function, such as a bus stop brake and/or a hill holding brake, **characterized in that** the retention function is maintained active and the generation of a warning in order to alert the driver of the vehicle is initiated when the following conditions, optionally in combination with one or several further conditions, are simultaneously fulfilled:
- it is established that the parking brake of the vehicle is not set,
- it is established that an automatic braking function of the vehicle is active, and
- the control unit (4) receives from the operating member (3) a control signal for switching off the ignition.

16. A method according to claim 15, **characterized in that** the retention function is deactivated, the control member (2) is manoeuvred from switched-on position to switched-off position and the generation of a warning in order to alert the driver of the vehicle is initiated when the following conditions, optionally in combination with one or several further conditions, are simultaneously fulfilled:
- it is established that the parking brake of the vehicle is not set,
- it is established that no automatic braking function of the vehicle is active, and
- the control unit (4) receives from the operating member (3) a control signal for switching off the ignition.

17. A computer program loadable directly into the internal memory of a computer, **characterized in that** the computer program comprises computer program code for causing the computer, under predetermined conditions, to activate a retention function that causes a control member being a relay of a motor vehicle, which control member is manoeuvrable between a switched-off position, in which the control member is arranged to keep the ignition of the vehicle switched-off, and a switched-on position, in which the control member is arranged to keep the ignition of the vehicle switched-on, to be retained in switched-on position by supplying an electrical current to the same and thereby prevents the control member from being manoeuvred from switched-on position to switched-off position under the effect of a manually manoeuvrable operating member.

18. A computer program according to claim 17, **characterized in that** the computer program comprises computer program code for causing the computer:
- to establish whether the control member has been manoeuvred from switched-off position to switched-on position under the effect of the operating member, and
- to activate the retention function when it is established that the control member has been manoeuvred from switched-off position to switched-on position under the effect of the operating member.

19. A computer program according to claim 18, **characterized in that** the computer program comprises computer program code for causing the computer:
- to establish whether the parking brake of the vehicle is set,
- to establish whether the operating member has been manoeuvred to an OFF position for switching off the ignition, and
- to deactivate the retention function, so that the control member thereby is allowed to be manoeuvred from switched-on position to switched-off position under the effect of the operating member, when the following conditions, optionally in combination with one or several further conditions, are simultaneously fulfilled:
- the parking brake of the vehicle is set,
- the operating member has been manoeuvred to the OFF position.

20. A computer program according to any of claims 17-19, **characterized in that** the computer program comprises computer program code for causing the computer:
- to establish whether the operating member has been manoeuvred to an ON position and has sent a control signal for switching on the ignition, or to an OFF position and has sent a control signal for switching off the ignition, and
- to control the control member in dependence on these control signals.

21. A computer program according to claim 20, **characterized in that** the computer program comprises computer program code for causing the computer to manoeuvre the control member to switched-on position and activate the retention function when the operating member has sent a control signal for switching on the ignition, on condition that the control member is not already in switched-on position and the retention function is not already activated.

22. A computer program according to claim 21, **characterized in that** the computer program comprises computer program code for causing the computer:
- to establish whether the parking brake of the vehicle is set, and
- to deactivate the retention function, manoeuvre the control member from switched-on position to switched-off position and initiate the generation of a warning in order to alert the driver of the vehicle when the following conditions, optionally in combination with one or several further conditions, are simultaneously fulfilled:
- the parting brake of the vehicle is not set, and
- the operating member has sent a control signal for switching off the ignition.

23. A computer program according to claim 21, **characterized in that** the computer program comprises computer program code for causing the computer:
- to establish whether the parking brake of the vehicle is set,
- to establish whether an automatic braking function, such as a bus stop brake and/or a hill holding brake, of the vehicle is active, and
- to maintain the retention function active and initiate the generation of a warning in order to alert the driver of the vehicle when the following conditions, optionally in combination with one or several further conditions, are simultaneously fulfilled:
- the parting brake of the vehicle is not set,
- an automatic braking function of the vehicle is active, and
- the operating member has sent a control signal for switching off the ignition.

24. A computer program according to claim 23, **characterized in that** the computer program comprises computer program code for causing the computer to deactivate the retention function, manoeuvre the control member from switched-on position to switched-off position and initiate the generation of a warning in order to alert the driver of the vehicle when the following conditions, optionally in combination with one or several further conditions, are simultaneously fulfilled:
- the parking brake of the vehicle is not set,
- no automatic braking function of the vehicle is active, and
- the operating member has sent a control signal for switching off the ignition.

25. A computer program product comprising a data storage medium readable by an electronic control unit (4), a computer program according to any of claims 17-24 being stored on said data storage medium.

26. An electronic control unit (4) comprising an execution means (11), a memory (13) connected to the execution means and a data storage medium (14) connected to the execution means, a computer program according to any of claims 17-24 being stored on said data storage medium (14).

## Patentansprüche

1. System zum Steuern der Zündung eines Kraftfahrzeugs, wobei das System umfasst:
- eine Steuerungskomponente (2), die als ein Relais ausgebildet ist, das verstellbar ist zwischen einer ausgeschalteten Position, in der die Steuerungskomponente (2) dazu eingerichtet ist, die Zündung des Fahrzeugs ausgeschaltet zu halten, und einer angeschalteten Position, in der die Steuerungskomponente (2) dazu eingerichtet ist, die Zündung des Fahrzeugs angeschaltet zu halten, und
- eine manuell verstellbare Bedienungskomponente (3), mittels der die Steuerungskomponente (2) zwischen der ausgeschalteten Position und der angeschalteten Position verstellbar ist, wobei die Bedienungskomponente (3) in eine AN-Position verstellbar ist, um die Zündung anzuschalten, und in eine AUS-Position, um die Zündung auszuschalten,
**dadurch gekennzeichnet, dass** das System eine elektrische Steuerungseinheit (4) umfasst, die dazu eingerichtet ist, unter vorbestimmten Bedingungen eine Haltefunktion zu aktivieren, wobei die Steuerungseinheit (4) dazu eingerichtet ist, dann, wenn die Haltefunktion aktiviert ist, die Steuerungskomponente (2) durch Versorgen der Steuerungskomponente mit elektrischer Spannung in der angeschalteten Position zu halten und dabei die Steuerungskomponente (2) daran zu hindern, unter Einwirkung der Bedienungskomponente (3) von der angeschalteten Position in die ausgeschaltete Position verstellt zu werden.

2. System nach Anspruch 1, **dadurch gekennzeichnet, dass** die Steuerungseinheit (4) dazu eingerichtet ist, die Haltefunktion zu aktivieren, wenn die Steuerungskomponente (2) unter Einwirkung der Bedienungskomponente (3) von der ausgeschalteten Position in die angeschaltete Position verstellt wird.

3. System nach Anspruch 2, **dadurch gekennzeichnet, dass** die Steuerungseinheit (4) dazu eingerichtet ist, die Haltefunktion zu deaktivieren und dabei der Steuerungskomponente (2) zu erlauben, unter Einwirkung der Bedienungskomponente (3) von der angeschalteten Position in die ausgeschaltete Position verstellt zu werden, wenn die folgenden Bedingungen, optional in Kombination mit einer oder mehreren weiteren Bedingungen, gleichzeitig erfüllt sind:
- die Steuerungseinheit (4) erhält Informationen, die darauf hinweisen, dass die Feststellbremse des Fahrzeugs betätigt ist, und
- die Steuerungseinheit (4) erhält Informationen, die darauf hinweisen, dass die Bedienungskomponente (3) in die AUS-Position verstellt wurde.

4. System nach einem der Ansprüche 1-3, **dadurch gekennzeichnet, dass** die Bedienungskomponente (3) dazu eingerichtet ist, dann, wenn sie in die AN-Position verstellt wird, der Steuerungseinheit (4) ein Steuerungssignal zum Anschalten der Zündung zu senden und dazu eingerichtet ist, dann, wenn sie in die AUS-Position verstellt wird, der Steuerungseinheit (4) ein Steuerungssignal zum Ausschalten der Zündung zu senden, wobei die Steuerungseinheit (4) dazu eingerichtet ist, die Steuerungskomponente (2) in Abhängigkeit dieser Steuerungssignale zu steuern.

5. System nach Anspruch 4, **dadurch gekennzeichnet, dass** die Steuerungseinheit (4) dazu eingerichtet ist, dann, wenn sie von der Bedienungskomponente (3) ein Steuerungssignal zum Anschalten der Zündung erhält, die Steuerungskomponente (2) zu der angeschalteten Position zu verstellen und die Haltefunktion zu aktivieren, unter der Bedingung, dass die Steuerungskomponente (2) nicht bereits in der angeschalteten Position ist und die Haltefunktion nicht bereits aktiviert ist.

6. System nach Anspruch 5, **dadurch gekennzeichnet, dass** die Steuerungseinheit (4) dazu eingerichtet ist, die Haltefunktion zu deaktivieren, die Steuerungskomponente (2) von der angeschalteten Position in die ausgeschaltete Position zu verstellen und das Erzeugen einer Warnung auszulösen, um den Fahrer des Fahrzeugs zu warnen, wenn die folgenden Bedingungen, optional in Kombination mit einer oder mehreren weiteren Bedingungen, gleichzeitig erfüllt sind:
- die Steuerungseinheit (4) erhält Informationen, die darauf hinweisen, dass die Feststellbremse des Fahrzeugs nicht betätigt ist, und
- die Steuerungseinheit (4) erhält von der Bedienungskomponente (3) ein Steuerungssignal zum Ausschalten der Zündung.

7. System nach Anspruch 5 zum Steuern der Zündung eines Kraftfahrzeugs, das eine automatische Bremsfunktion aufweist, wie beispielsweise eine Bushaltestellenbremse und/oder eine Berganfahrhilfsbremse, **dadurch gekennzeichnet, dass** die Steuerungseinheit (4) dazu eingerichtet ist, die Haltefunktion im aktiven Zustand zu halten und das Erzeugen einer Warnung auszulösen, um den Fahrer des Fahrzeugs zu warnen, wenn die folgenden Bedingungen, optional in Kombination mit einer oder mehreren weiteren Bedingungen, gleichzeitig erfüllt sind.
- die Steuerungseinheit (4) erhält Informationen, die darauf hinweisen, dass die Feststellbremse des Fahrzeugs nicht betätigt ist,
- die Steuerungseinheit (4) erhält Informationen, die darauf hinweisen, dass die automatische Bremsfunktion des Fahrzeugs aktiv ist, und
- die Steuerungseinheit (4) erhält von der Bedienungskomponente (3) ein Steuerungssignal zum Ausschalten der Zündung.

8. System nach Anspruch 7, **dadurch gekennzeichnet, dass** die Steuerungseinheit (4) dazu eingerichtet ist, die Haltefunktion zu deaktivieren, die Steuerungskomponente (2) von der angeschalteten Position in die ausgeschaltete Position zu verstellen und das Erzeugen einer Warnung auszulösen, um den Fahrer des Fahrzeugs zu warnen, wenn die folgenden Bedingungen, optional in Kombination mit einer oder mehreren weiteren Bedingungen, gleichzeitig erfüllt sind:
- die Steuerungseinheit (4) erhält Informationen, die darauf hinweisen, dass die Feststellbremse des Fahrzeugs nicht betätigt ist,
- die Steuerungseinheit (4) erhält Informationen, die darauf hinweisen, dass keine automatische Bremsfunktion des Fahrzeugs aktiv ist, und
- die Steuerungseinheit (4) erhält von der Bedienungskomponente (3) ein Steuerungssignal zum Ausschalten der Zündung.

9. Verfahren zum Steuern der Zündung eines Kraftfahrzeugs, das aufweist:
- eine Steuerungskomponente (2), die als ein Relais ausgebildet ist, das verstellbar ist zwischen einer ausgeschalteten Position, in der die Steuerungskomponente (2) dazu eingerichtet ist, die Zündung des Fahrzeugs ausgeschaltet zu halten, und einer angeschalteten Position, in der die Steuerungskomponente (2) dazu eingerichtet ist, die Zündung des Fahrzeugs angeschaltet zu halten, und
- eine manuell verstellbare Bedienungskomponente (3), mittels der die Steuerungskomponente (2) zwischen der ausgeschalteten Position und der angeschalteten Position verstellbar ist, wobei die Bedienungskomponente (3) in eine AN-Position zum Anschalten der Zündung und in eine AUS-Position zum Ausschalten der Zündung verstellbar ist,
**dadurch gekennzeichnet, dass** eine Haltefunktion einer mit der Steuerungskomponente (2) verbundenen Steuerungseinheit (4) unter vorbestimmten Bedingungen aktiviert wird, um die Steuerungskomponente (2) durch Versorgen der Steuerungskomponente mit elektrischer Spannung in der angeschalteten Position zu halten und dabei die Steuerungskomponente (2) daran zu hindern, unter Einwirkung der Bedienungskomponente (3) von der angeschalteten Position in die ausgeschaltete Position verstellt zu werden.

10. Verfahren nach Anspruch 9, **dadurch gekennzeichnet, dass** die Haltefunktion aktiviert wird, wenn die Steuerungskomponente (2) unter Einwirkung der Bedienungskomponente (3) von der ausgeschalteten Position in die angeschaltete Position verstellt wird.

11. Verfahren nach Anspruch 10, **dadurch gekennzeichnet, dass** die Haltefunktion deaktiviert wird, so dass der Steuerungskomponente (2) dadurch erlaubt wird, unter Einwirkung der Bedienungskomponente (3) von der angeschalteten Position in die ausgeschaltete Position verstellt zu werden, wenn die folgenden Bedingungen, optional in Kombination mit einer oder mehreren weiteren Bedingungen, gleichzeitig erfüllt sind:
- es wird festgestellt, dass die Feststellbremse des Fahrzeugs betätigt ist, und
- es wird festgestellt, dass die Bedienungskomponente (3) in die AUS-Position verstellt wurde.

12. Verfahren nach einem der Ansprüche 9-11, **dadurch gekennzeichnet, dass** die Bedienungskomponente (3), dann, wenn sie in die AN-Position verstellt wird, der Steuerungseinheit (4) ein Steuerungssignal zum Anschalten der Zündung sendet, und, dann, wenn sie in die AUS-Position verstellt wird, der Steuerungseinheit (4) ein Steuerungssignal zum Ausschalten der Zündung sendet, wobei die Steuerungseinheit (4) die Steuerungskomponente (2) in Abhängigkeit von diesen Steuerungssignalen steuert.

13. Verfahren nach Anspruch 12, **dadurch gekennzeichnet, dass** die Steuerungskomponente (2) in die angeschaltete Position verstellt wird und die Haltefunktion aktiviert wird, wenn die Steuerungseinheit (4) von der Bedienungskomponente (3) ein Steuerungssignal zum Anschalten der Zündung erhält, unter der Bedingung, dass die Steuerungskomponente (2) nicht bereits in der angeschalteten Position ist und die Haltefunktion nicht bereits aktiviert ist.

14. Verfahren nach Anspruch 13, **dadurch gekennzeichnet, dass** die Haltefunktion deaktiviert wird, die Steuerungskomponente (2) von der angeschalteten Position in die ausgeschaltete Position verstellt wird und das Erzeugen einer Warnung zum Warnen des Fahrers des Fahrzeugs ausgelöst wird, wenn die folgenden Bedingungen, optional in Kombination mit einer oder mehreren weiteren Bedingungen, gleichzeitig erfüllt sind:
- es wird festgestellt, dass die Feststellbremse des Fahrzeugs nicht betätigt ist, und
- die Steuerungseinheit (4) erhält von der Bedienungskomponente (3) ein Steuerungssignal zum Ausschalten der Zündung.

15. Verfahren nach Anspruch 14 zum Steuern der Zündung eines Kraftfahrzeugs, das eine automatische Bremsfunktion aufweist, wie beispielsweise eine Bushaltestellenbremse oder eine Berganfahrhilfsbremse, **dadurch gekennzeichnet, dass** die Haltefunktion in einem aktiven Zustand gehalten wird und das Erzeugen einer Warnung zum Warnen des Fahrers des Fahrzeugs ausgelöst wird, wenn die folgenden Bedingungen, optional in Kombination mit einer oder mehreren weiteren Bedingungen, gleichzeitig erfüllt sind:
- es wird festgestellt, dass die Feststellbremse des Fahrzeugs nicht betätigt ist,
- es wird festgestellt, dass eine automatische Bremsfunktion des Fahrzeugs aktiv ist, und
- die Steuerungseinheit (4) erhält von der Bedienungskomponente (3) ein Steuerungssignal zum Ausschalten der Zündung.

16. Verfahren nach Anspruch 15, **dadurch gekennzeichnet, dass** die Haltefunktion deaktiviert wird, die Bedienungskomponente (2) von der angeschalteten Position in die ausgeschaltete Position verstellt wird und das Erzeugen einer Warnung zum Warnen des Fahrers des Fahrzeugs ausgelöst wird, wenn die folgenden Bedingungen, optional in Kombination mit einer oder mehreren weiteren Bedingungen, gleichzeitig erfüllt sind:
- es wird festgestellt, dass die Feststellbremse des Fahrzeugs nicht betätigt ist,
- es wird festgestellt, dass keine automatische Bremsfunktion des Fahrzeugs aktiv ist, und
- die Steuerungseinheit (4) erhält von der Bedienungskomponente (3) ein Steuerungssignal zum Ausschalten der Zündung.

17. Computerprogramm, das direkt in den internen Speicher eines Computers ladbar ist, **dadurch gekennzeichnet, dass** das Computerprogramm einen Computerprogrammcode umfasst, der dafür vorgesehen ist, den Computer unter vorbestimmten Bedingungen dazu zu veranlassen, eine Haltefunktion zu aktivieren, die eine Steuerungskomponente, die als ein Relais eines Kraftfahrzeugs ausgebildet ist, wobei die Steuerungskomponente verstellbar ist zwischen einer ausgeschalteten Position, in der die Steuerungskomponente dafür vorgesehen ist, die Zündung des Fahrzeugs ausgeschaltet zu halten, und einer angeschalteten Position, in der die Steuerungskomponente dafür vorgesehen ist, die Zündung des Fahrzeugs angeschaltet zu halten, dazu veranlasst, durch Versorgung derselben mit einer elektrischen Spannung in der angeschalteten Position gehalten zu werden und dadurch die Steuerungskomponente daran zu hindern, unter Einwirkung einer manuell verstellbaren Bedienungskomponente von der angeschalteten Position in die ausgeschaltete Position verstellt zu werden.

18. Computerprogramm nach Anspruch 17, **dadurch gekennzeichnet, dass** das Computerprogramm einen Computerprogrammcode umfasst, der dafür vorgesehen ist, den Computer dazu zu veranlassen:
- festzustellen, ob die Steuerungskomponente unter Einwirkung der Bedienungskomponente von der ausgeschalteten Position in die angeschaltete Position verstellt wurde, und
- die Haltefunktion zu aktivieren, wenn festgestellt wird, dass die Steuerungskomponente unter Einwirkung der Bedienungskomponente von der ausgeschalteten Position in die angeschaltete Position verstellt wurde.

19. Computerprogramm nach Anspruch 18, **dadurch gekennzeichnet, dass** das Computerprogramm Computerprogrammcode umfasst, der dafür vorgesehen ist, den Computer dazu zu veranlassen,
- festzustellen, ob die Feststellbremse des Fahrzeugs betätigt ist,
- festzustellen, ob die Bedienungskomponente in die AUS-Position verstellt wurde, um die Zündung auszuschalten, und
- die Haltefunktion zu deaktivieren, so dass der Steuerungskomponente dadurch erlaubt wird, unter Einwirkung der Bedienungskomponente von der angeschalteten Position in die ausgeschaltete Position verstellt zu werden, wenn die folgenden Bedingungen, optional in Kombination mit einer oder mehreren weiteren Bedingungen, gleichzeitig erfüllt sind:
- die Feststellbremse des Fahrzeugs ist betätigt,
- die Bedienungskomponente wurde in die AUS-Position verstellt.

20. Computerprogramm nach einem der Ansprüche 17-19, **dadurch gekennzeichnet, dass** das Computerprogramm Computerprogrammcode enthält, der dafür vorgesehen ist, den Computer dazu zu veranlassen:
- festzustellen, ob die Bedienungskomponente in eine AN-Position verstellt wurde und ein Steuerungssignal zum Anschalten der Zündung gesendet hat oder in eine AUS-Position verstellt wurde und ein Steuerungssignal zum Ausschalten der Zündung gesendet hat, und
- die Steuerungskomponente in Abhängigkeit von diesen Steuerungssignalen zu steuern.

21. Computerprogramm nach Anspruch 20, **dadurch gekennzeichnet, dass** das Computerprogramm Computerprogrammcode umfasst, der dafür vorgesehen ist, den Computer dazu zu veranlassen, die Steuerungskomponente zu der angeschalteten Position zu verstellen und die Haltefunktion zu aktivieren, wenn die Bedienungskomponente ein Steuerungssignal zum Anschalten der Zündung gesendet hat, unter der Bedingung, dass die Steuerungskomponente nicht bereits in der angeschalteten Position ist und die Haltefunktion nicht bereits aktiviert ist.

22. Computerprogramm nach Anspruch 21, **dadurch gekennzeichnet, dass** das Computerprogramm Computerprogrammcode umfasst, der dafür vorgesehen ist, den Computer dazu zu veranlassen:
- festzustellen, ob die Feststellbremse des Fahrzeugs betätigt ist, und
- die Haltefunktion zu deaktivieren, die Steuerungskomponente von der angeschalteten Position in die ausgeschaltete Position zu verstellen und das Erzeugen einer Warnung zum Warnen des Fahrers des Fahrzeugs auszulösen, wenn folgende Bedingungen, optional in Kombination mit einer oder mehreren weiteren Bedingungen, gleichzeitig erfüllt sind:
- die Feststellbremse des Fahrzeugs ist nicht betätigt, und
- die Bedienungskomponente hat ein Steuerungssignal zum Ausschalten der Zündung gesendet.

23. Computerprogramm nach Anspruch 21, **dadurch gekennzeichnet, dass** das Computerprogramm Computerprogrammcode umfasst, der dafür vorgesehen ist, den Computer dazu zu veranlassen:
- festzustellen, ob die Feststellbremse des Fahrzeugs betätigt ist,
- festzustellen, ob eine automatische Bremsfunktion, wie beispielsweise eine Bushaltestellenbremse und/oder eine Berganfahrhilfsbremse, des Fahrzeugs aktiv ist, und
- die Haltefunktion im aktiven Zustand zu halten und das Erzeugen einer Warnung zum Warnen des Fahrers des Fahrzeugs auszulösen, wenn die folgenden Bedingungen, optional in Kombination mit einer oder mehreren weiteren Bedingungen, gleichzeitig erfüllt sind:
- die Feststellbremse des Fahrzeugs ist nicht betätigt,
- eine automatische Bremsfunktion des Fahrzeugs ist aktiv, und
- die Bedienungskomponente hat ein Steuerungssignal zum Ausschalten der Zündung gesendet.

24. Computerprogramm nach Anspruch 23, **dadurch gekennzeichnet, dass** das Computerprogramm Computerprogrammcode umfasst, der dafür vorgesehen ist, den Computer dazu zu veranlassen, die Haltefunktion zu deaktivieren, die Steuerungskomponente von der angeschalteten Position in die ausgeschaltete Position zu verstellen und das Erzeugen einer Warnung zum Warnen des Fahrers des Fahrzeugs auszulösen, wenn die folgenden Bedingungen, optional in Kombination mit einer oder mehreren weiteren Bedingungen, gleichzeitig erfüllt sind:
- die Feststellbremse des Fahrzeugs ist nicht betätigt,
- keine automatische Bremsfunktion des Fahrzeugs ist aktiv, und
- die Bedienungskomponente hat ein Steuerungssignal zum Ausschalten der Zündung gesendet.

25. Computerprogrammprodukt, umfassend ein von einer elektronischen Steuerungseinheit (4) lesbares Datenspeichermedium, wobei ein Computerprogramm nach einem der Ansprüche 17-24 dafür vorgesehen ist, auf dem Datenspeichermedium gespeichert zu werden.

26. Elektronische Steuerungseinheit (4), umfassend ein Ausführungsmittel (11), einen Speicher (13), der mit dem Ausführungsmittel verbunden ist, und ein Datenspeichermedium (14), das mit dem Ausführungsmittel verbunden ist, wobei ein Computerprogramm nach einem der Ansprüche 17-24 dafür vorgesehen ist, auf dem Datenspeichermedium (14) gespeichert zu werden.

## Revendications

1. Système pour commander l'allumage d'un véhicule à moteur, ce système comprenant :
- un élément de commande (2), qui est un relais qui peut être manoeuvré entre une position de commutation hors service, dans laquelle l'élément de commande (2) est conçu pour maintenir hors service l'allumage du véhicule, et une position de commutation en service, dans laquelle l'élément de commande (2) est conçu pour maintenir en service l'allumage du véhicule, et
- un élément d'actionnement pouvant être manoeuvré manuellement (3), grâce auquel l'élément de commande (2) peut être manoeuvré entre une position de commutation hors service et une position de commutation en service, l'élément d'actionnement (3) pouvant être manoeuvré en position EN SERVICE pour mettre l'allumage en service et en position HORS SERVICE pour mettre l'allumage hors service,
**caractérisé en ce que** le système comprend une unité de commande électronique (4), qui est conçue pour activer une fonction de rétention dans des conditions prédéterminées, l'unité de commande (4) étant conçue, lorsque la fonction de rétention est activée, pour maintenir l'élément de commande (2) dans la position de commutation en service par la délivrance d'un courant électrique à l'élément de commande, et pour empêcher ainsi l'élément de commande (2) d'être manoeuvré de la position de commutation en service en position de commutation hors service sous l'effet de l'élément d'actionnement (3).

2. Système selon la revendication 1, **caractérisé en ce que** l'unité de commande (4) est conçue pour activer la fonction de rétention lorsque l'élément de commande (2) est manoeuvré de la position de commutation hors service en position de commutation en service sous l'effet de l'élément d'actionnement (3).

3. Système selon la revendication 2, **caractérisé en ce que** l'unité de commande (4) est conçue pour désactiver la fonction de rétention, et, par conséquent, permettre à l'élément de commande (2) d'être manoeuvré de la position de commutation en service en position de commutation hors service sous l'effet de l'élément d'actionnement (3), lorsque les conditions suivantes, de façon optionnelle en combinaison avec une ou plusieurs autres conditions, sont remplies simultanément :
- l'unité de commande (4) reçoit une information indiquant que le frein de stationnement du véhicule est actionné, et
- l'unité de commande (4) reçoit une information indiquant que l'élément d'actionnement (3) a été manoeuvré en position HORS SERVICE.

4. Système selon l'une quelconque des revendications 1 à 3, **caractérisé en ce que** l'élément d'actionnement (3), lorsqu'il est manoeuvré en position EN SERVICE, est conçu pour envoyer à l'unité de commande (4) un signal de commande destiné à mettre l'allumage en service, **en ce que**, lorsqu'il est manoeuvré en position HORS SERVICE, il est conçu pour envoyer à l'unité de commande (4) un signal de commande destiné à mettre l'allumage hors service, et **en ce que** l'unité de commande (4) est conçue pour commander l'élément de commande (2) en fonction de ces signaux de commande.

5. Système selon la revendication 4, **caractérisé en ce que** l'unité de commande (4), lorsqu'elle reçoit de l'élément d'actionnement (3) un signal de commande pour mettre l'allumage en service, est conçue pour manoeuvrer l'élément de commande (2) en position de commutation en service et pour activer la fonction de rétention, à la condition que l'élément de commande (2) ne soit pas déjà dans la position de commutation en service et que la fonction de rétention ne soit pas déjà activée.

6. Système selon la revendication 5, **caractérisé en ce que** l'unité de commande (4) est conçue pour désactiver la fonction de rétention, pour manoeuvrer l'élément de commande (2) de la position de commutation en service en position de commutation hors service et pour déclencher la génération d'une alarme afin d'alerter le conducteur du véhicule lorsque les conditions suivantes, de façon optionnelle en combinaison avec une ou plusieurs autres conditions, sont remplies simultanément :
- l'unité de commande (4) reçoit une information indiquant que le frein de stationnement du véhicule n'est pas actionné, et
- l'unité de commande (4) reçoit à partir de l'élément d'actionnement (3) un signal de commande pour mettre l'allumage hors service.

7. Système selon la revendication 5, pour commander l'allumage d'un véhicule à moteur qui est muni d'une fonction de freinage automatique, telle qu'un frein d'arrêt d'autobus et/ou un frein anti-recul, **caractérisé en ce que** l'unité de commande (4) est conçue pour maintenir la fonction de rétention active et pour déclencher la génération d'une alarme afin d'alerter le conducteur du véhicule lorsque les conditions suivantes, de façon optionnelle en combinaison avec une ou plusieurs autres conditions, sont remplies simultanément :
- l'unité de commande (4) reçoit une information indiquant que le frein de stationnement du véhicule n'est pas actionné,
- l'unité de commande (4) reçoit une information indiquant qu'une fonction de freinage automatique du véhicule est active, et
- l'unité de commande (4) reçoit à partir de l'élément d'actionnement (3) un signal de commande pour mettre l'allumage hors service.

8. Système selon la revendication 7, **caractérisé en ce que** l'unité de commande (4) est conçue pour désactiver la fonction de rétention, pour manoeuvrer l'élément de commande (2) de la position de commutation en service en position de commutation hors service et pour déclencher la génération d'une alarme afin d'alerter le conducteur du véhicule lorsque les conditions suivantes, de façon optionnelle en combinaison avec une ou plusieurs autres conditions, sont remplies simultanément :
- l'unité de commande (4) reçoit une information indiquant que le frein de stationnement du véhicule n'est pas actionné,
- l'unité de commande (4) reçoit une information indiquant qu'aucune fonction de freinage automatique du véhicule n'est active, et
- l'unité de commande (4) reçoit à partir de l'élément d'actionnement (3) un signal de commande pour mettre l'allumage hors service.

9. Procédé pour commander l'allumage d'un véhicule à moteur qui est muni de :
- un élément de commande (2), qui est un relais qui peut être manoeuvré entre une position de commutation hors service, dans laquelle l'élément de commande (2) est conçu pour maintenir hors service l'allumage du véhicule, et une position de commutation en service, dans laquelle l'élément de commande (2) est conçu pour maintenir en service l'allumage du véhicule, et
- un élément d'actionnement pouvant être manoeuvré manuellement (3), grâce auquel l'élément de commande (2) peut être manoeuvré entre une position de commutation hors service et une position de commutation en service, l'élément de commutation (3) pouvant être manoeuvré en position EN SERVICE pour mettre l'allumage en service et en position HORS SERVICE pour mettre l'allumage hors service,
**caractérisé en ce qu'**une fonction de rétention d'une unité de commande (4) connectée à l'élément de commande (2) est activée dans des conditions prédéterminées de façon à maintenir l'élément de commande (2) dans la position de commutation en service par la délivrance d'un courant électrique à l'élément de commande, et de façon à empêcher ainsi l'élément de commande (2) d'être manoeuvré de la position de commutation en service en position de commutation hors service sous l'effet de l'élément d'actionnement (3).

10. Procédé selon la revendication 9, **caractérisé en ce que** la fonction de rétention est activée lorsque l'élément de commande (2) est manoeuvré de la position de commutation hors service en position de commutation en service sous l'effet de l'élément d'actionnement (3).

11. Procédé selon la revendication 10, **caractérisé en ce que** la fonction de rétention est désactivée, de telle sorte qu'il soit ainsi permis à l'élément de commande (2) d'être manoeuvré de la position de commutation en service en position de commutation hors service sous l'effet de l'élément d'actionnement (3), lorsque les conditions suivantes, de façon optionnelle en combinaison avec une ou plusieurs autres conditions, sont remplies simultanément :
- il est établi que le frein de stationnement du véhicule est actionné, et
- il est établi que l'élément d'actionnement (3) a été manoeuvré en position HORS SERVICE.

12. Procédé selon l'une quelconque des revendications 9 à 11, **caractérisé en ce que** l'élément d'actionnement (3), lorsqu'il est manoeuvré en position EN SERVICE, envoie à l'unité de commande (4) un signal de commande pour mettre l'allumage en service, **en ce que**, lorsqu'il est manoeuvré en position HORS SERVICE, il envoie à l'unité de commande (4) un signal de commande pour mettre l'allumage hors service, et **en ce que** l'unité de commande (4) commande l'élément de commande (2) en fonction de ces signaux de commande.

13. Procédé selon la revendication 12, **caractérisé en ce que** l'élément de commande (2) est manoeuvré en position de commutation en service et **en ce que** la fonction de rétention est activée lorsque l'unité de commande (4) reçoit à partir de l'élément d'actionnement (3) un signal de commande pour mettre l'allumage en service, à la condition que l'élément de commande (2) ne soit pas déjà dans la position de commutation en service et que la fonction de rétention ne soit pas déjà activée.

14. Procédé selon la revendication 13, **caractérisé en ce que** la fonction de rétention est désactivée, l'élément de commande (2) est manoeuvré de la position de commutation en service en position de commutation hors service et la génération d'une alarme afin d'alerter le conducteur du véhicule est déclenchée lorsque les conditions suivantes, de façon optionnelle en combinaison avec une ou plusieurs autres conditions, sont remplies simultanément :
- il est établi que le frein de stationnement du véhicule n'est pas actionné, et
- l'unité de commande (4) reçoit à partir de l'élément d'actionnement (3) un signal de commande pour mettre l'allumage hors service.

15. Procédé selon la revendication 14, pour commander l'allumage d'un véhicule à moteur qui est muni d'une fonction de freinage automatique, telle qu'un frein d'arrêt d'autobus et/ou un frein anti-recul, **caractérisé en ce que** la fonction de rétention est maintenue active et la génération d'une alarme afin d'alerter le conducteur du véhicule est déclenchée lorsque les conditions suivantes, de façon optionnelle en combinaison avec une ou plusieurs autres conditions, sont remplies simultanément :
- il est établi que le frein de stationnement du véhicule n'est pas actionné,
- il est établi qu'une fonction de freinage automatique du véhicule est active, et
- l'unité de commande (4) reçoit à partir de l'élément d'actionnement (3) un signal de commande pour mettre l'allumage hors service.

16. Procédé selon la revendication 15, **caractérisé en ce que** la fonction de rétention est désactivée, l'élément de commande (2) est manoeuvré de la position de commutation en service en position de commutation hors service et la génération d'une alarme afin d'alerter le conducteur du véhicule est déclenchée lorsque les conditions suivantes, de façon optionnelle en combinaison avec une ou plusieurs autres conditions, sont remplies simultanément :
- il est établi que le frein de stationnement du véhicule n'est pas actionné,
- il est établi qu'aucune fonction de freinage automatique du véhicule n'est active, et
- l'unité de commande (4) reçoit à partir de l'élément d'actionnement (3) un signal de commande pour mettre l'allumage hors service.

17. Programme informatique pouvant être chargé directement dans la mémoire interne d'un ordinateur, **caractérisé en ce que** le programme informatique comprend un code de programme informatique pour faire activer par l'ordinateur, dans des conditions prédéterminées, une fonction de rétention qui provoque le maintien d'un élément de commande, qui est un relais d'un véhicule à moteur, cet élément de commande pouvant être manoeuvré entre une position de commutation hors service, dans laquelle l'élément de commande est conçu pour maintenir hors service l'allumage du véhicule, et une position de commutation en service, dans laquelle l'élément de commande est conçu pour maintenir en service l'allumage du véhicule, dans la position de commutation en service par la délivrance d'un courant électrique à celui-ci, et empêche par conséquent l'élément de commande d'être manoeuvré de la position de commutation en service en position de commutation hors service sous l'effet d'un élément d'actionnement pouvant être actionné manuellement.

18. Programme informatique selon la revendication 17, **caractérisé en ce que** le programme informatique comprend un code de programme informatique qui commande à l'ordinateur :
- d'établir si, oui ou non, l'élément de commande a été manoeuvré de la position de commutation hors service en position de commutation en service sous l'effet de l'élément d'actionnement, et
- d'activer la fonction de rétention lorsqu'il est établi que l'élément de commande a été manoeuvré de la position de commutation hors service en position de commutation en service sous l'effet de l'élément d'actionnement.

19. Programme informatique selon la revendication 18, **caractérisé en ce que** le programme informatique comprend un code de programme informatique qui commande à l'ordinateur :
- d'établir si, oui ou non, le frein de stationnement du véhicule est actionné,
- d'établir si, oui ou non, l'élément d'actionnement a été manoeuvré en position HORS SERVICE pour mettre l'allumage hors service, et
- de désactiver la fonction de rétention, de telle sorte qu'il soit ainsi permis à l'élément de commande d'être manoeuvré de la position de commutation en service en position de commutation hors service sous l'effet de l'élément d'actionnement, lorsque les conditions suivantes, de façon optionnelle en combinaison avec une ou plusieurs autres conditions, sont remplies simultanément :
- le frein de stationnement du véhicule est actionné,
- l'élément d'actionnement a été manoeuvré en position HORS SERVICE.

20. Programme informatique selon l'une quelconque des revendications 17 à 19, **caractérisé en ce que** le programme informatique comprend un code de programme informatique qui commande à l'ordinateur :
- d'établir si, oui ou non, l'élément d'actionnement a été manoeuvré en position EN SERVICE et a envoyé un signal de commande pour mettre l'allumage en service, ou en position HORS SERVICE et a envoyé un signal de commande pour mettre l'allumage hors service, et
- de commander l'élément de commande en fonction de ces signaux de commande.

21. Programme informatique selon la revendication 20, **caractérisé en ce que** le programme informatique comprend un code de programme informatique pour commander à l'ordinateur de manoeuvrer l'élément de commande en position de commutation en service et d'activer la fonction de rétention lorsque l'élément d'actionnement a envoyé un signal de commande pour mettre l'allumage en service, à la condition que l'élément de commande ne soit pas déjà dans la position de commutation en service et que la fonction de rétention ne soit pas déjà activée.

22. Programme informatique selon la revendication 21, **caractérisé en ce que** le programme informatique comprend un code de programme informatique qui commande à l'ordinateur :
- d'établir si, oui ou non, le frein de stationnement du véhicule est actionné, et
- de désactiver la fonction de rétention, de manoeuvrer l'élément de commande de la position de commutation en service en position de commutation hors service et de déclencher la génération d'une alarme afin d'alerter le conducteur du véhicule lorsque les conditions suivantes, de façon optionnelle en combinaison avec une ou plusieurs autres conditions, sont remplies simultanément :
- le frein de stationnement du véhicule n'est pas actionné, et
- l'élément d'actionnement a envoyé un signal de commande pour mettre l'allumage hors service.

23. Programme informatique selon la revendication 21, **caractérisé en ce que** le programme informatique comprend un code de programme informatique qui commande à l'ordinateur :
- d'établir si, oui ou non, le frein de stationnement du véhicule est actionné,
- d'établir si, oui ou non, une fonction de freinage automatique, telle qu'un frein d'arrêt d'autobus et/ou un frein anti-recul, du véhicule, est active, et
- de maintenir la fonction de rétention active et de déclencher la génération d'une alarme afin d'alerter le conducteur du véhicule lorsque les conditions suivantes, de façon optionnelle en combinaison avec une ou plusieurs autres conditions, sont remplies simultanément :
- le frein de stationnement du véhicule n'est pas actionné,
- une fonction de freinage automatique du véhicule est active, et
- l'élément d'actionnement a envoyé un signal de commande pour mettre l'allumage hors service.

24. Programme informatique selon la revendication 23, **caractérisé en ce que** le programme informatique comprend un code de programme informatique pour commander à l'ordinateur de désactiver la fonction de rétention, de manoeuvrer l'élément de commande de la position de commutation en service en position de commutation hors service et de déclencher la génération d'une alarme afin d'alerter le conducteur du véhicule lorsque les conditions suivantes, de façon optionnelle en combinaison avec une ou plusieurs autres conditions, sont remplies simultanément :
- le frein de stationnement du véhicule n'est pas actionné,
- aucune fonction de freinage automatique du véhicule n'est active, et
- l'élément d'actionnement a envoyé un signal de commande pour mettre l'allumage hors service.

25. Produit de programme informatique comprenant un support de mémorisation de données lisible par une unité de commande électronique (4), un programme informatique selon l'une quelconque des revendications 17 à 24 étant mémorisé sur ledit support de mémorisation de données.

26. Unité de commande électronique (4) comprenant des moyens d'exécution (11), une mémoire (13) connectée aux moyens d'exécution et un support de mémorisation de données (14) connecté aux moyens d'exécution, un programme informatique selon l'une quelconque des revendications 17 à 24 étant mémorisé sur ledit support de mémorisation de données (14).
